# EUROPÄISCHE PATENTSCHRIFT

(11) **EP 0 966 703 B1**
(45) Veröffentlichungstag und Bekanntmachung des Hinweises auf die Patenterteilung: **02.10.2002**
(21) Anmeldenummer: 98916847.1
(22) Anmeldetag: 03.03.1998
(51) Int. Cl.: G05B 19/042

(54) **VERFAHREN ZUR RECHNERGESTÜTZTEN FEHLERANALYSE VON SENSOREN UND/ODER AKTOREN IN EINEM TECHNISCHEN SYSTEM**
METHOD FOR COMPUTER-ASSISTED ERROR CHECKING OF SENSORS AND/OR ACTORS IN TECHNICAL SYSTEMS
PROCEDE D'ANALYSE ASSISTEE PAR ORDINATEUR DE DEFAILLANCES DE CAPTEURS ET/OU D'ACTIONNEURS DANS UN SYSTEME TECHNIQUE

(30) Priorität: 11.03.1997 DE 19709956
(43) Veröffentlichungstag der Anmeldung: 29.12.1999
(73) Patentinhaber: SIEMENS AKTIENGESELLSCHAFT, 80333 München (DE)
(72) Erfinder: LIGGESMEYER, Peter, D-85579 Neubiberg (DE)
(86) Internationale Anmeldenummer: DE9800633
(87) Internationale Veröffentlichungsnummer: WO98040796

(56) Entgegenhaltungen:
- EP-A- 0 424 869
- EP-A- 0 685 792
- EP-B- 0 352 759
- EP-B- 0 580 663
- BURCH J R ET AL: "SYMBOLIC MODEL CHECKING FOR SEQUENTIAL CIRCUIT VERIFICATION" 1. April 1994 , IEEE TRANSACTIONS ON COMPUTER AIDED DESIGN OF INTEGRATED CIRCUITS AND SYSTEMS, VOL. 13, NR. 4, PAGE(S) 401 - 424 XP000453301 in der Anmeldung erwähnt siehe das ganze Dokument
- ENDERS R ET AL: "GENERATING BDDS FOR SYMBOLIC MODEL CHECKING IN CCS" 1. Januar 1991 , COMPUTER AIDED VERIFICATION 3RD. AALBORG, DENMARK, JULY 1-4, 1991, PAGE(S) 203 - 213 XP000350630 siehe das ganze Dokument

## Beschreibung

Für komplexe technische Systeme oder Anlagen ist es von enormer Bedeutung, Aussagen über die Zuverlässigkeit des jeweiligen Systems bzw. der Anlage treffen zu können.

Es ist bekannt, daß Aussagen über die Zuverlässigkeit eines beliebigen technischen Systems bzw. einer Anlage manuell, beispielsweise durch eine sog. Fehlerbaumanalyse (vgl. [1]), oder simulativ bzw. analytisch auf Basis von speziell zu diesem Zweck erstellten Modellen (vgl. [2]) erzeugt werden können. Zur einfacheren Darstellung wird im weiteren nur noch von technischen Systemen gesprochen. Technische Anlagen sind im Rahmen dieses Dokuments jedoch in dem Begriff des technischen Systems umfaßt. Eine vollständige manuelle Ermittlung der Auswirkungen eines technischen Fehlverhaltens von Sensoren und/oder Aktoren, ist in einem komplexen technischen System aufgrund der vernetzten Abhängigkeiten und der unterschiedlichen Realisierungsformen der Steuerung, des gesteuerten Systems und der Sensorik und/oder Aktorik praktisch nicht möglich. Die in [2] beschriebenen analytischen Techniken erfordern die Erstellung eines speziellen Modells, für das im allgemeinen nicht garantiert werden kann, daß es das jeweils betrachtete System korrekt beschreibt. Dadurch wird natürlich die Qualität der Aussagen erheblich reduziert. Ferner ist ein erheblicher Nachteil der in [2] beschriebenen Ansätze, daß die Modellerstellung zusätzlichen Entwicklungsaufwand und Zeit erfordert. Dadurch wird eine kurzfristige Untersuchung alternativer Realisierungen eines technischen Systems, was auch als Rapid Prototyping bezeichnet wird, verhindert.

Es ist bekannt, ein technisches System in einer zustandsendlichen Beschreibung, z.B. als Automat, zu beschreiben. Eine zustandsendliche Beschreibung weist üblicherweise Zustände auf, in denen Aktionen durchgeführt werden, wenn sich das technische System in dem jeweiligen Zustand befindet. Ferner weist die zustandsendliche Beschreibung üblicherweise 2u-standsübergänge auf, die mögliche Wechsel des technischen Systems zwischen Zuständen beschreiben. Auch bei Zustandsübergängen kann das technische System Aktionen durchführen. In einem gesteuerten technischen System ist es in diesem Zusammenhang bekannt, die zustandsendliche Beschreibung derart auszugestalten, daß das Verhalten der Steuerung des technischen Systems und das Verhalten der gesteuerten Anlage als Zustandsautomat dargestellt wird. Auch ist bei diesen Ansätzen nicht sichergestellt, daß alle möglichen Fehlerauswirkungen auf das System korrekt ermittelt werden.

Möglichkeiten zur textuellen Beschreibung eines Zustandsautomaten, die mit einem Rechner verarbeitet wird, sind z.B. Interlocking Specification Language (ISL) oder Control Specification Language (CSL), die in [3] beschrieben sind.

Es ist ferner bekannt, eine zustandsendliche Beschreibung für die Generierung von Steuerungen durch einen Rechner und für den rechnergestützten Nachweis von Eigenschaften eines fehlerfreien technischen Systems zu verwenden.

Eine Möglichkeit zum rechnergestützten Nachweis von Eigenschaften eines fehlerfreien technischen Systems verwendet das Prinzip des sog. Model Checkings, das in [4] beschrieben ist.

Ferner ist es bekannt zur zustandsendlichen Beschreibung eines Systems ein sogenanntes Finite State Machine-Format (FSM-Format) zu verwenden, deren Grundlagen in [5] beschrieben sind. Binary Decision Diagrams (BDD) besitzen den Vorteil, in vielen Fällen auch sehr umfangreiche Zustandssysteme kompakt zu repräsentieren.

Somit liegt der Erfindung das Problem zugrunde, ein Verfahren zur rechnergestützten Fehleranalyse von Sensoren und/oder Aktoren in einem technischen System anzugeben, mit dem die Korrektheit der Fehleranalyse gewährleistet wird.

Das Problem wird durch das Verfahren mit den Merkmalen des Patentanspruchs 1 gelöst.

Das Verfahren wird mit einem Rechner durchgeführt und umfaßt folgende Schritte:
a) für einen Fehler eines Sensors und/oder eines Aktors des Systems wird eine zustandsendliche Beschreibung des technischen Systems für den Fehlerfall ermittelt,
b) für das technische System wird eine erste Menge erreichbarer Zustände ermittelt,
c) für das fehlerbehaftete technische System wird eine zweite Menge erreichbarer Zustände ermittelt,
d) es wird eine Differenzmenge aus der ersten Menge und der zweiten Menge gebildet,
e) es werden Ergebniszustände aus der Differenzmenge ermittelt, die vorgebbaren Bedingungen genügen.

Anschaulich kann die Erfindung dadurch beschrieben werden, daß ein Model Checking sowohl für das fehlerfreie technische System als auch ein mit einem Fehler eines Sensors und/oder Aktors behafteten System durchgeführt wird. Durch das Model Checking werden alle erreichbaren Zustände des fehlerfreien bzw. des fehlerbehafteten Systems ermittelt. Aus diesen Zuständen wird eine Differenzmenge von Zuständen gebildet. Für die Differenzmenge werden die Zustände der Differenzmenge ermittelt, die einer vorgebbaren Bedingung genügen, z.B. einer Sicherheitsanforderung an das System. Diese Zustände stellen für den jeweils untersuchten Fehlerfall einen "gefährlichen" Zustand bzgl. der vorgebbaren Bedingung dar.

Durch das Verfahren wird gewährleistet, daß alle für den jeweils untersuchten Fehlerfall, d.h. für den fehlerhaften Sensor und/oder Aktor, hinsichtlich vorgebbarer Bedingungen "gefährliche" Zustände ermittelt werden.

Vorteilhafte Weiterbildungen der Erfindung ergeben sich aus den abhängigen Ansprüchen.

Es ist vorteilhaft, das Verfahren für alle möglichen Fehler von Sensoren und/oder Aktoren, die das technische System aufweist, durchzuführen. Auf diese Weise wird für das gesamte System gewährleistet, daß hinsichtlich vorgebbarer Bedingungen alle "gefährlichen" Zustände ermittelt werden.

Ferner ist es vorteilhaft, den Sensoren und/oder Aktoren Ausfallwahrscheinlichkeiten zuzuordnen und die Fehleranalyse unter Berücksichtigung der Ausfallwahrscheinlichkeiten durchzuführen. Auf diese Weise wird es ohne größeren Rechenaufwand bei der Durchführung des Verfahrens mit einem Rechner möglich, für die ermittelten Zustände anzugeben, mit welcher Wahrscheinlichkeit dieser Zustand tatsächlich erreicht wird, womit eine Risikoabschätzung für das jeweils analysierte System sehr einfach und anschaulich möglich wird.

Weiterhin ist es zur weiteren Rechenzeiteinsparung bei der Durchführung des Verfahrens mit einem Rechner vorteilhaft, die zustandsendliche Beschreibung durch einen endlichen Automaten in Form eines Binary Decision Diagrams (BDD) zu realisieren.

Das Verfahren kann durch die oben Beschriebenen Eigenschaften sehr vorteilhaft in folgenden Gebieten Verwendung finden:
- beim Rapid Prototyping des technischen Systems.
- im Rahmen der Fehlerdiagnose des technischen Systems.
- zur Generierung kritischer Prüffälle für eine Inbetriebsetzung und einen Systemtest des technischen Systems.
- zur präventiven Wartung des technischen Systems.

In den Figuren ist ein Ausführungsbeispiel der Erfindung dargestellt, welches im weiteren näher erläutert wird.

Es zeigen
- Figur 1: ein skizzenhafte Darstellung des Verfahrens;
- Figur 2: eine Skizze einer zustandsendlichen Beschreibung einer Steuerung und des durch die Steuerung gesteuerten Prozesses eines technischen Systems, wobei die fehlerfreie Steuerung und der Prozeß jeweils als ein eigener Zustandsautomat beschrieben sind;
- Figur 3: eine Skizze der zustandsendlichen Beschreibung aus Figur 1 mit einem symbolisch dargestellten allgemeinen Sensorfehlermodell und Aktorfehlermodell;
- Figur 4: eine Skizze der zustandsendlichen Beschreibung aus Figur 1 mit einem symbolisch dargestellten nichtpersistenten Fehler eines Sensors;
- Figur 5: eine Skizze der zustandsendlichen Beschreibung aus Figur 1 mit dem Fehler aus Figur 4, wobei als Ersatz des Fehlermodells die Steuerung modifiziert wurde;
- Figur 6: eine Skizze einer Draufsicht des Ausführungsbeispiels, einem Hubdrehtisch einer Fertigungszelle;
- Figur 7: eine Skizze, in der die vorgesehene Bewegung des Hubdrehtischs aus Figur 6 dargestellt ist;
- Figur 8: eine Skizze des Zustandsraums des fehlerfreien Hubdrehtischs;
- Figur 9: eine Skizze des Zustandsraums eines fehlerbehafteten Hubdrehtisch;

Eine geeignete zustandsendliche Beschreibung stellt das Verhalten der Steuerung und das Verhalten der gesteuerten Anlage als Zustandsautomat dar. Die Darstellung kann auf unterschiedliche Weise, z.B. in textueller Form unter Verwendung von ISL oder CSL, erfolgen.

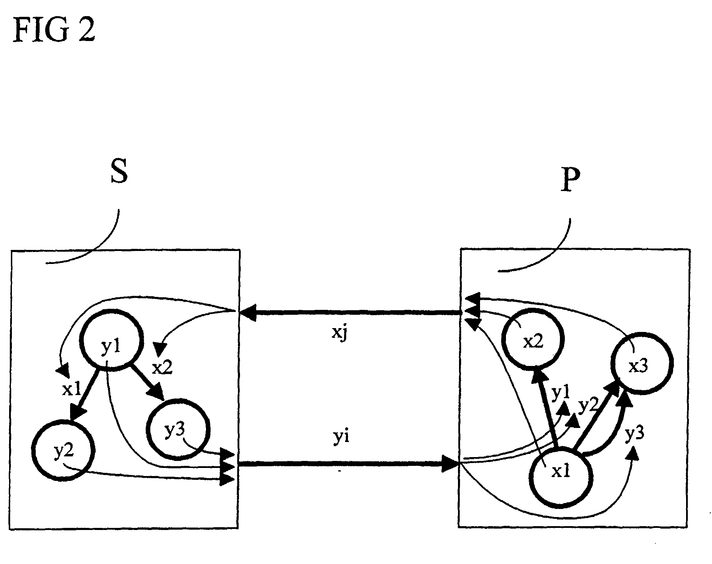

In Figur 2 ist ein einfaches technisches System mit einer fehlerfreien Steuerung FS, Zuständen y1, y2, y3 und Zustandsübergängen x1, x2 als Zustandsautomat dargestellt. Die Steuerung S beschreibt als Zustände Aktoren. Ein gesteuerter Prozeß P enthält die Beschreibung von Sensoren x1 x2, x3 als Zustände x1, x2, x3 und Zustandsübergänge y1, y2, y3.

Die Steuerung S des Systems reagiert auf Meßwerte xj(x1, x2, x3) von Sensoren X.Somit werden durch Sensordaten daher in der Steuerung S Zustandsübergänge ausgelöst. Die Zustände sind durch Werte yi (y1, y2, y3) von Zustandsvariablen Y charakterisiert, die Aktoren zugeordnet sind. Das Stellen von Aktoren Y löst wiederum Zustandsübergänge in der gesteuerten Anlage, d.h. in dem Prozeß P aus, was sich in einer Modifikation der Werte der Sensoren X äußert.

Die Zustandsautomaten der Steuerung S und des Prozesses P führen alternierend Zustandsübergänge durch. Die Ausgaben des einen Automaten sind die Eingaben des jeweils anderen Automaten.

Die Schnittstelle zwischen Steuerung und gesteuerter Umgebung kann in einer entsprechenden Beschreibung automatisch erkannt werden. Ferner ist es möglich, wie im weiterem detailliert beschrieben wird, einer derartigen Beschreibung den Wertevorrat zu entnehmen, den die einzelnen Werte (Zustände bzw. Zustandsübergänge) annehmen können.

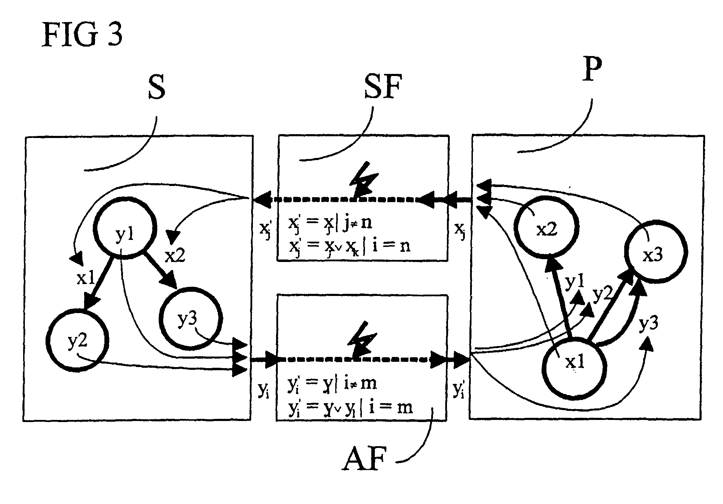

In Figur 3 ist symbolisch eine Fehlermodellierung für fehlerhafte Sensoren in einem Sensorfehlermodell SF und für fehlerhafte Aktoren in einem Aktorfehlermodell AF dargestellt.

Technisch sind also an der Schnittstelle zwischen Steuerung S und gesteuertem Prozeß P Sensoren X und Aktoren Y angeschlossen. Ein Fehlverhalten eines Sensors X führt dazu, daß anstelle des korrekten Meßwerts xj ein anderer, fehlerhafter Wert x'ⱼ an die Steuerung S geliefert wird, d.h. der Steuerung S zugeführt wird. Ein Fehlverhalten eines Aktors äußert sich im Einstellen eines falschen Werts y'ᵢ anstelle des Werts yi. Welche Sensoren X und Aktoren Y vorhanden sind und welcher Wertevorrat hier zu berücksichtigen ist, kann der zustandsendlichen Beschreibung entnommen werden.

Dies gestattet die automatisierte, systematische Analyse der Auswirkungen von Sensor- und Aktorfehlern auf das Verhalten eines gesteuerten Systems. Zwischen den gesteuerten Prozeß P und die Steuerung S werden Sensorfehlermodelle SF bzw. Aktorfehlermodelle AF geschaltet, die den jeweiligen Fehler des Sensors x und/oder Aktors y beschreiben. In der Figur 3 sind beispielhaft Modelle für intermittierende (nicht persistente) Einzelfehler der Sensorik und Aktorik angegeben.

Ein nichtpersistenter Einzelfehler eines Sensors x wird beschrieben durch folgende Vorschrift:

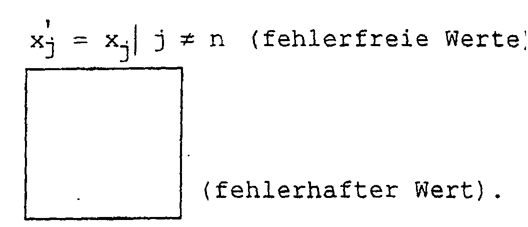

Ein nichtpersistenter Einzelfehler eines Aktors y wird beschrieben durch folgende Vorschrift:

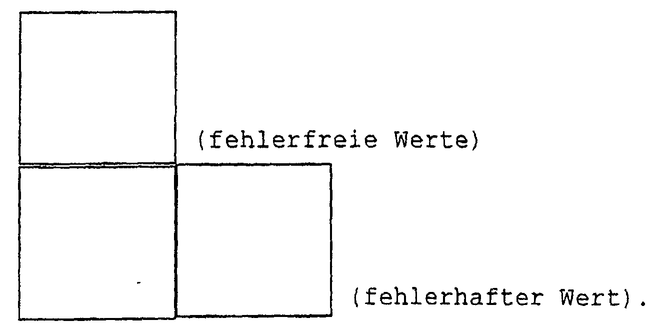

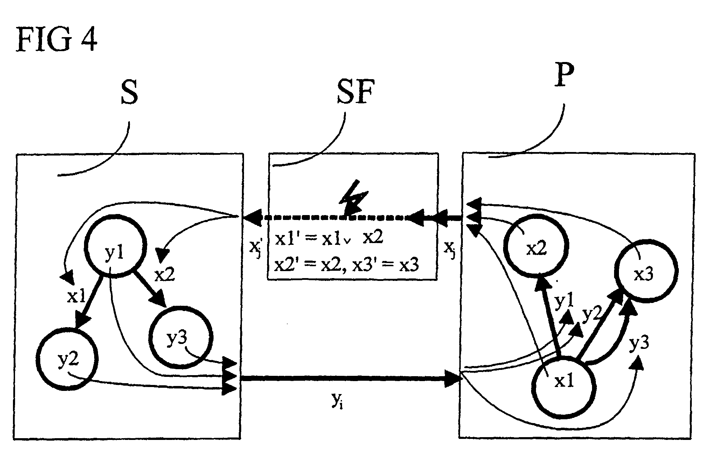

Figur 4 zeigt das allgemeine Sensorfehlermodell SF aus Figur 3 für den Fall, daß ein nichtpersistenter Einzelfehler bei einem ersten Sensorwert x1 vorliegt derart, daß der erste Sensorwert x1 entweder den korrekten ersten Sensorwert x1 oder aufgrund eines Sensorfehlers einen zweiten Sensorwert x2 aufweist, der in diesem Fall ein fehlerhafter Wert wäre. Der zweite Sensorwert x2 und ein dritter Sensorwert x3 werden korrekt gemessen.

Eine wichtige Frage, die es zu beantworten gilt, ist nun, ob die Kombination aus Steuerung S und gesteuerten Prozeß P aufgrund des Sensorfehlers in kritische Zustände gelangen kann, die im fehlerfreien Fall sicher ausgeschlossen werden konnten.

Eine Möglichkeit, diesen Nachweis für den fehlerfreien Fall zu erbringen, bietet das sogenannte Model Checking, welches in [4] beschrieben ist. Dieses Verfahren gestattet es, die Menge der erreichbaren Zustände zu ermitteln und zu untersuchen, ob Zustände enthalten sind, die z.B. Sicherheitsbedingungen verletzen.

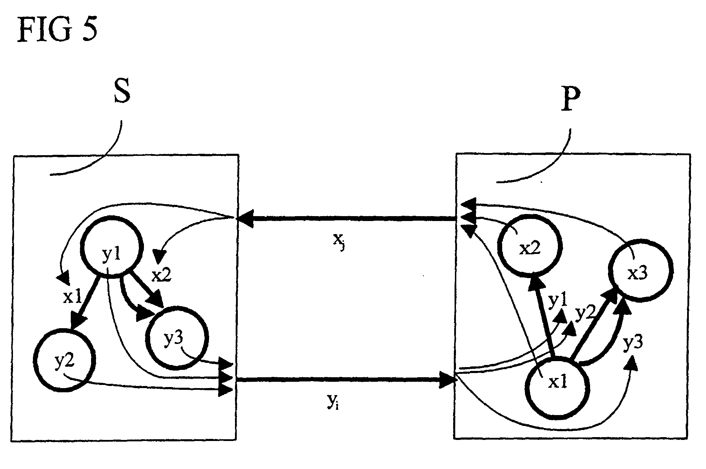

Um diese Technik zur Fehleranalyse von in dem System enthaltenen Sensoren X und/oder Aktoren Y anwenden zu können, werden hier die Sensorfehlermodelle SF bzw. Aktorfehlermodelle AF durch eine geänderte Steuerungslogik beschrieben (vgl. Figur 5).

Die in Figur 5 dargestellte Kombination aus Steuerung S und gesteuertem Prozeß P verhält sich identisch zu dem in Figur 4 dargestellten Modell für den Fehlerfall bei dem ersten Sensorwert x1. Es kann hier jedoch auf den Einschub eines expliziten Fehlermodells zwischen Steuerung S und gesteuertem Prozeß P verzichtet werden. Aufgrund des angenommenen intermittierenden Fehlers werden in der Steuerung mit x1 indizierte Zustandsübergänge parallel zu den mit x2 markierten Zustandsübergängen hinzugefügt.

Damit wird der folgende Sachverhalt beschrieben:
Der zweite Sensorwert x2 und der dritte Sensorwert x3 werden korrekt gemessen. Daher ist das Steuerungsverhalten für diese Werte unmodifiziert. Da ein intermittierender Fehler angenommen wird, kann auch der erste Sensorwert x1 korrekt gemeldet werden, so daß diese Zustandsübergänge erhalten bleiben. Würde eine persistente Vertauschung von dem ersten Sensorwert x1 mit dem zweiten Sensorwert x2 angenommen, so müßten mit x1 beschriftete Kanten gelöscht werden. Alle Zustandsübergänge die mit x2 markiert sind, können nun auch beim Wert x1 durchlaufen werden. Daher wird eine entsprechende Kante in der Steuerung S ergänzt. Die Steuerung S reagiert auf den Wert x2, aber an der Stelle x1 des Prozesses.

Diese Modifikation der Steuerungslogik zur Beschreibung von Fehlern kann formal für alle betrachtbaren Fehler automatisch durch den Rechner durchgeführt werden.

Für die entstehenden Modelle können die Fragen nach der Erreichbarkeit von kritischen Zuständen (z.B. Sicherheit, Verklemmungen) ebenfalls durch Anwendung des Model Checkings beantwortet werden. Es erfolgt also eine automatische Ermittlung der im fehlerbehafteten System erreichbaren Zustände vorzugsweise unter Verwendung des Model Checkings.

Anschließend wird jeweils eine Differenzmenge der im jeweiligen Fehlerfall erreichbaren Zustände und der im fehlerfreien Fall erreichbaren Zustände ermittelt.

Aus der Differenzmenge werden jene Zustände ermittelt, die mindestens einer vom Benutzer vorgebbaren Bedingung (z.B. Verletzung einer Sicherheitsanforderung) genügen bzw. diese verletzen, je nach Anwendung.

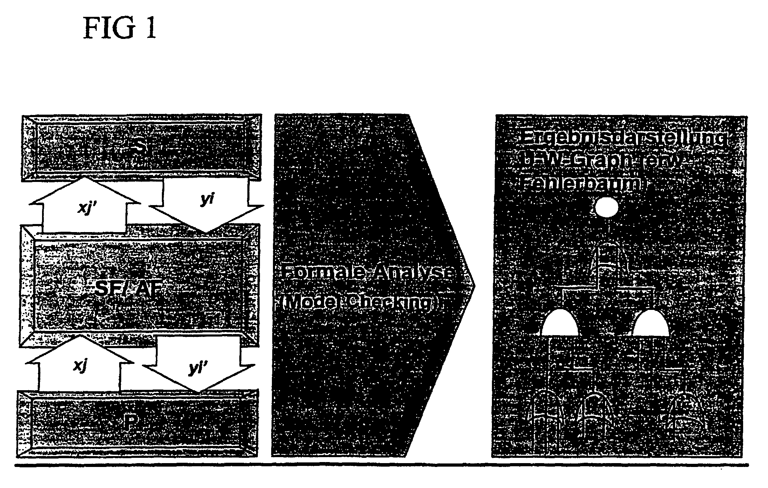

In Figur 1 ist diese Vorgehensweise noch einmal in einem Blockschaltbild symbolisch dargestellt. Für die Steuerung FS und den gesteuerten Prozeß P wird mindestens ein Sensorfehlermodell SF und/oder mindestens ein Aktorfehlermodell AF erstellt, unter deren Berücksichtigung eine formale Analyse der zustandsendlichen Beschreibung für das fehlerbehaftete System vorzugsweise durch Model Checking erfolgt.

Für das Ergebnis des Vergleichs mit dem fehlerfreien System und der Ermittlung "gefährlicher" Zustände werden die Ursache-Wirkungs-Zusammenhänge zwischen Sensor- bzw. Aktorfehlern und dem möglichen Eintritt der betrachteten Wirkung ermittelt und vorzugsweise in einem Ursache-Wirkungs-Graph dargestellt.

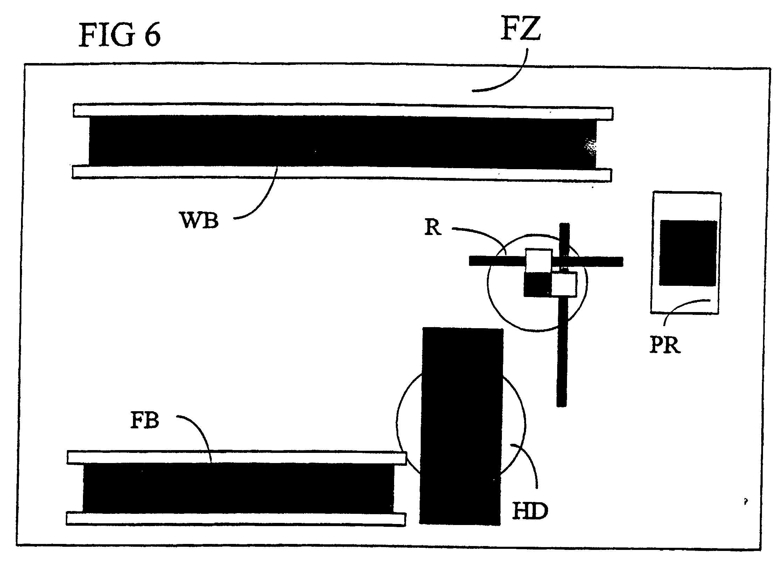

In Figur 6 ist ein technisches System in Form eines Hubdrehtischs HD einer Fertigungszelle FZ dargestellt, mit dem das Verfahren noch detaillierter dargestellt werden soll.

Die Fertigungszelle FZ weist ein zuführendes Förderband FB, an dessen Ende ein Hubdrehtisch Werkstücke WS aufnimmt und einem Roboter R zuführt. Der Roboter R legt das Werkstück WS in eine Presse PR und gibt es nach dem Formen auf ein wegführendes Band WB. Die Fertigungszelle FZ enthält entsprechende Sensoren X und Aktoren Y.

Der Hubdrehtisch HD kann sich mit Hilfe zweier Antriebe (nicht dargestellt) in vertikaler (vmov) und horizontaler (hmov) Richtung bewegen. Jeder Antrieb kann in negative (minus) oder positive (plus) Richtung angesteuert werden oder stillstehen (stop).

Der Hubdrehtisch HD verfügt über Sensoren X zur vertikalen (vpos) und horizontalen (hpos) Positionserfassung, die die Positionen x0 (unten), x1 (mitte) und x2 (oben) unterscheiden können. Zusätzlich erfaßt ein weiterer Sensor (part_on_table) (nicht dargestellt) das Vorhandensein eines Werkstücks WS auf dem Hubdrehtisch HD.

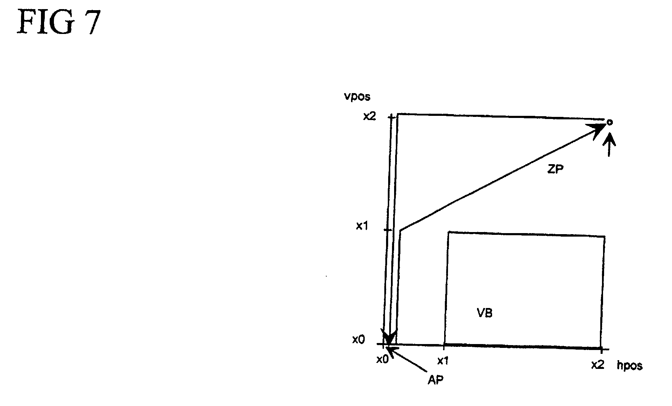

Die Ausgangsposition AP des Hubdrehtischs HD ist am unteren, linken Anschlag (x0,x0) ohne Werkstück WS (vgl. Figur 7). Falls ein Werkstück WS vom zuführenden Förderband FB auf den Hubdrehtisch HD fällt, so ist die Zielposition ZP des Hubdrehtischs HD oben rechts (x2, x2).

Der Hubdrehtisch HD darf niemals eine andere horizontale Position als x0 (linker Anschlag) in Kombination mit der vertikalen Position x0 (unten) einnehmen, da er sonst mit dem zuführenden Förderband FB kollidieren würde (verbotener Bereich VB).

Im weiteren ist eine Beschreibung des Zustandsautomaten der Steuerung FS des Hubdrehtischs HD in CSL angegeben:

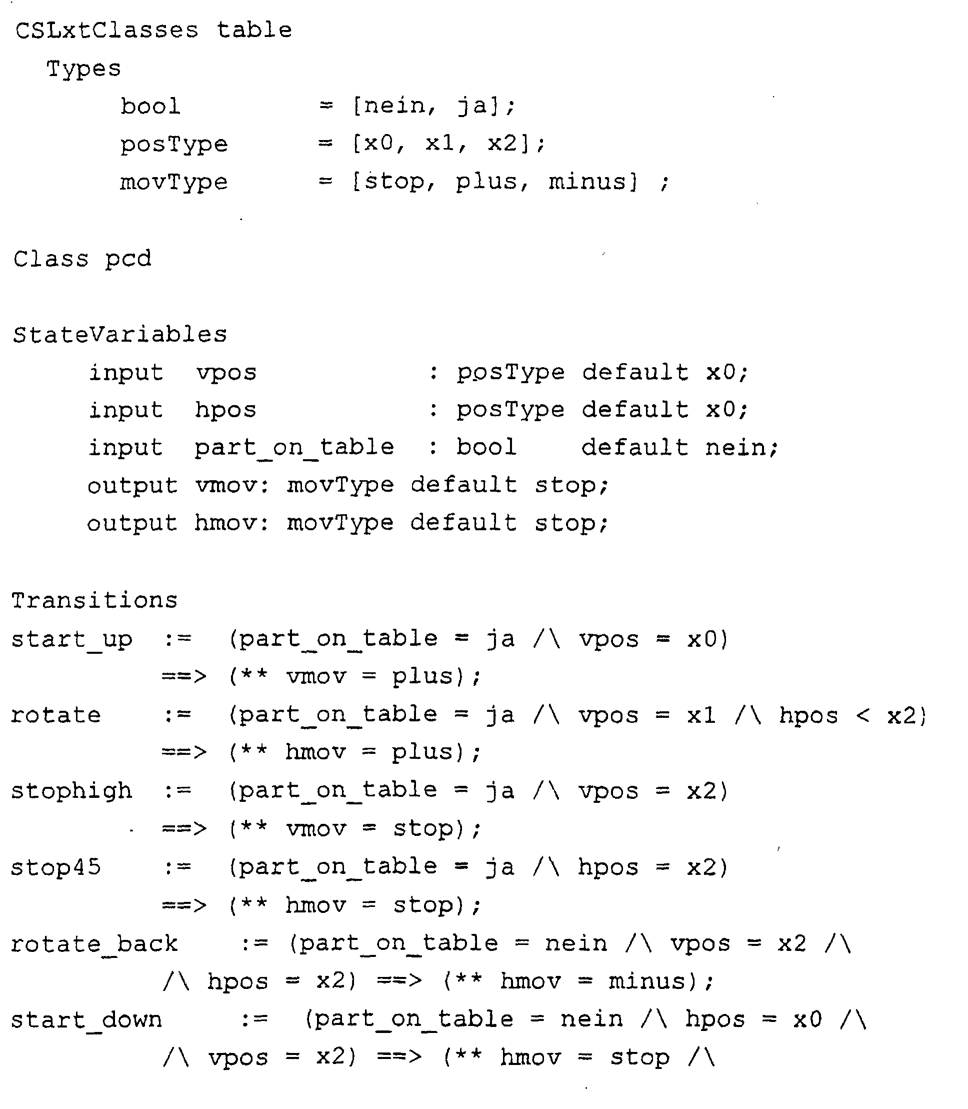

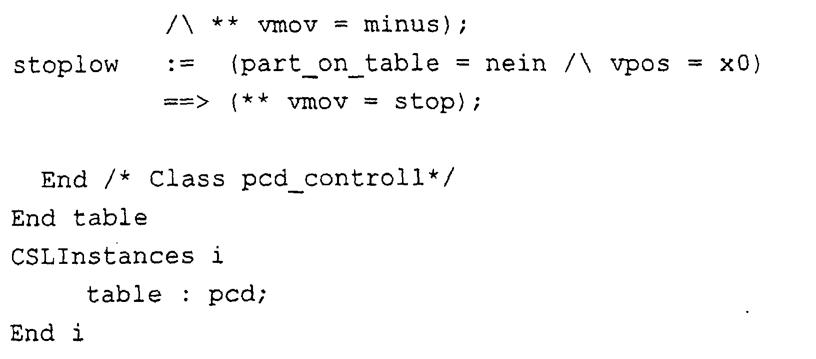

Die oben angegebene Beschreibung in CSL legt die Steuerungslogik des Hubdrehtischs HD fest. Der Kopf der CSL-Beschreibung vereinbart Datentypen (Wertebereiche) der Zustandsvariablen. Die anschließende Deklaration der Zustandsvariablen nutzt diese Typvereinbarungen und legt zusätzlich Anfangswerte fest. Anhand der Vereinbarung von Zustandsvariablen als Input oder Output kann festgestellt werden, ob es sich um eine Zustandsvariable handelt, die den Prozeßzustand darstellt oder ob sie Zustände der Steuerung FS kodiert. Inputvariablen der Steuerung FS kodieren Prozeßzustände. Outputvariablen der Steuerung FS kodieren Steuerungszustände. Die Zeile "input vpos: posType default x0" deklariert eine Zustandsvariable mit Namen "vpos", die die Werte x0, x1 *und* x2 (die Werte des Typs posType) annehmen kann und deren Anfangswert x0 ist.

Die Transitionen (Transitions) dienen zur Beschreibung der Steuerungslogik. Transitionen werden ausgelöst durch Wertekombinationen der Inputvariablen der Steuerung FS, die Prozeßzustände darstellen - also die Position des Hubdrehtischs HD in der vertikalen (vpos) und der horizontalen (hpos) Bewegungsrichtung und das Vorhandensein eines Werkstücks WS auf dem Hubdrehtisch HD (part_on_table). Die Werte der Outputvariablen vmov und hmov werden durch die Transitionen, die die Steuerungslogik implementieren, modifiziert. Sie beschreiben die Zustände der Steuerung. Ihre Werte werden allein durch Zustandsübergänge der Steuerung, also durch die der Steuerung eingeprägte Logik modifiziert.

Diese Informationen können aus der CSL-Beschreibung automatisch entnommen werden. Es kann zwischen Eingaben der Steuerung (Inputs, Sensordaten) und Ausgaben der Steuerung (Outputs: Aktorkommandos) unterschieden werden. Außerdem sind die jeweils möglichen Werte erkennbar (Typdeklarationen).

Die Informationen bleiben im wesentlichen auch nach der Übersetzung der CSL-Beschreibung in das sogenannte Finite State Machine-Format (FSM-Format) erhalten. Dieses FSM-Format repräsentiert die zustandsendliche Beschreibung in Form sogenannter Binary Decision Diagrams (BDD), die den Vorteil besitzen, in vielen Fällen auch sehr umfangreiche Zustandssysteme kompakt zu repräsentieren. Eine Übersicht über Binary Decision Diagrams (BDD) ist in [5] beschrieben.

Ein Prozeßmodell zur Beschreibung der Reaktionen des gesteuerten Prozesses ist ergänzend zur in CSL beschriebenen Steuerungslogik erforderlich, um z.B. Aussagen über die Menge der erreichbaren Zustände zu ermöglichen. Dies kann im Rahmen des Model Checkings mit Hilfe sogenannter Assumptions, erfolgen. Da das Model Checking auch im Rahmen der formalen Verifikation der fehlerfreien Steuerung üblicherweise verwendet wird, sind diese Assumptions üblicherweise bereits vorhanden und können im Rahmen dieser Analyse erneut verwendet werden.

Mit den Assumptions wird beschrieben, wie sich die Positionen des Hubdrehtischs HD und das Vorhandensein eines Werkstücks WS in Abhängigkeit der Bewegungsrichtung und der aktuellen Position verändern können. Die unten dargestellte Assumption ('table.vmov' = stop / \ 'table.vpos' = x0) / \
x('table.vpos' = x0) stellt dar, daß, falls die vertikale Bewegung gestoppt ist und die aktuelle vertikale Position unten (x0) ist, auch im nächsten Zustand die vertikale Position x0 ist. Dieser Assumption liegt der Sachverhalt zugrunde, daß sich Positionen nicht ändern, falls keine Bewegung stattfindet.

Im weiteren sind mögliche Assumptions, d.h. Bedingungen für die oben beschriebene Steuerung FS beschrieben:

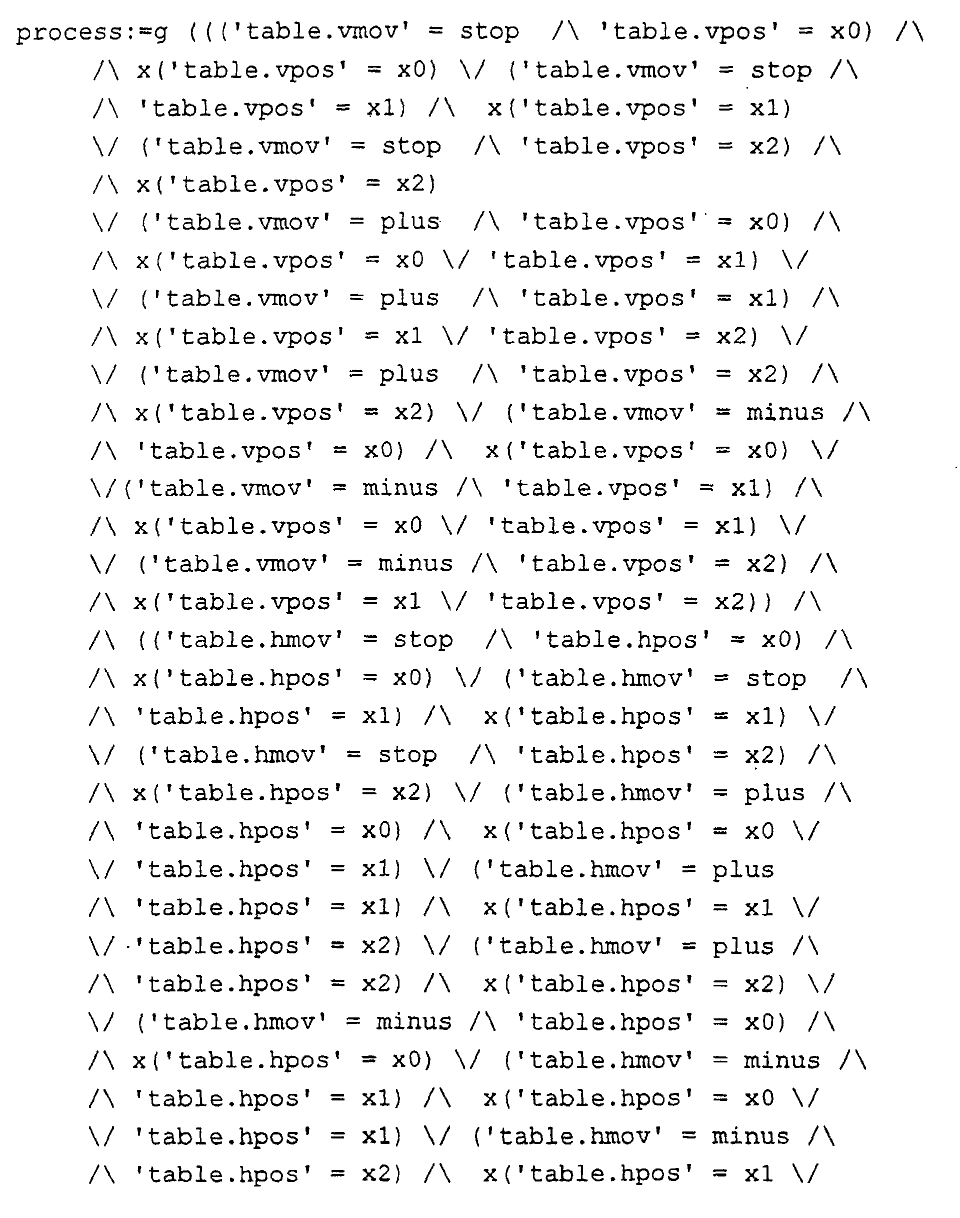

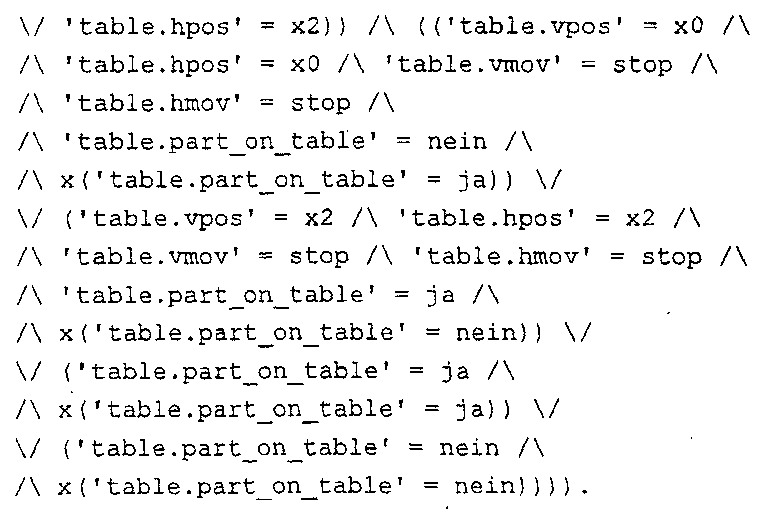

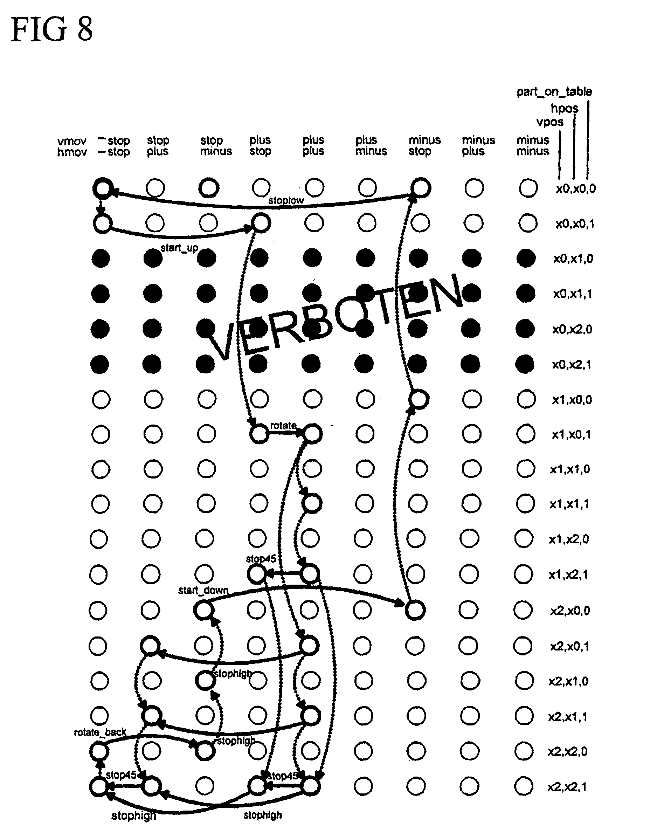

In Figur 8 ist ein Zustandsraum ZR des Hubdrehtischs HD und die Bewegung des fehlerfreien Hubdrehtischs HD im Zustandsraum ZR dargestellt, wie er sich nach Durchführung des Model Checkings auf die zustandsendliche Beschreibung der fehlerfreien Steuerung FS mit den angegebenen Assumptions ergibt.

In den Zeilen ist jeweils ein Wertepaar für das Tripel der Variablen (vpos, hpos, part_on_table) dargestellt. In den Spalten ist jeweils ein Wertepaar für das Tupel der Variablen (vmov, hmov) mit den jeweils oben definierten Wertemengen dargestellt.

Schraffiert Kreise in dem Zustandsraum ZR markieren hinsichtlich der Sicherheitsbedingung "verbotene" bzw. "gefährliche" Zustände. Fett markierte Kreise in dem Zustandsraum ZR markieren Zustände, die der Hubdrehtisch HD gemäß der oben angegebenen Beschreibung annehmen kann. Diese wurden durch das Model Checking ermittelt. Durch Pfeile sind Zustandsübergänge in dem Zustandsraum ZR angedeutet.

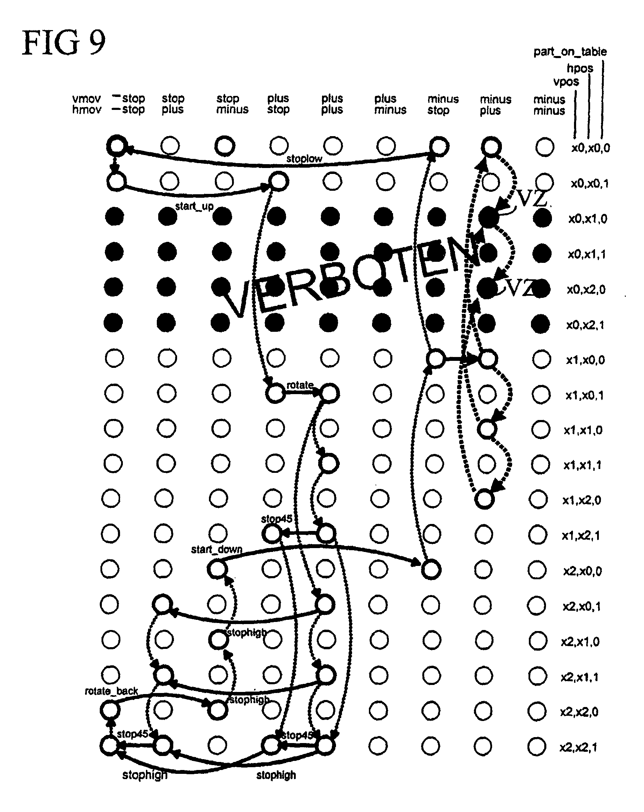

In Figur 9 ist der Zustandsraum ZR des Hubdrehtischs HD und die Bewegung des Hubdrehtischs HD im Zustandsraum ZR dargestellt, falls der Sensor 'part_on_table' fehlerhafterweise ein Werkstück WS meldet. In Figur 9 werden die gleichen Bezeichnungen verwendet wie in Figur 8. Es ist deutlich zu erkennen, daß für diesen Fehlerfall Zustände auftreten können, die im fehlerfreien System nicht erreichbar sind. Diese Zustände sind in Figur 9 mit VZ bezeichnet.

Den einzelnen Sensoren x und/oder Aktoren y werden Ausfallwahrscheinlichkeiten zugeordnet, die jeweils die Wahrscheinlichkeit für das Auftreten eines Fehlers bei dem Sensor x bzw. Aktor y beschreiben. Durch Verknüpfung von Verbundwahrscheinlichkeiten für das Auftreten von Fehlern verschiedener Sensoren und/oder Aktoren und für das Auftreten verschiedener Zustände kann durch diese Vorgehensweise eine sehr einfach Risikoabschätzung für das technische System erfolgen. Details zur Berechnung abhängiger Wahrscheinlichkeiten in Fehlerbaämen sind in [1] zu finden.

Somit erfolgt die Fehleranalyse unter Berücksichtigung der Ausfallwahrscheinlichkeiten.

Das Verfahren wird vorzugsweise für alle möglichen Fehler der vorhandenen Sensoren und/oder Aktoren durchgeführt.

Im Rahmen dieses Dokuments wurden folgende Veröffentlichungen zitiert:
[1] DIN 25424, Teil 1: Fehlerbaumanalyse: Methode und Bildzeichen; Teil 2: Handrechenverfahren zur Auswertung eines Fehlerbaums
[2] J. Dekleer und B. C. Williams, Diagnosing Multiple Faults, , Elsevier Science Publishers, Artificial Intelligence, Vol. 32, 1987, S. 97 -130
[3] K. Nökel, K. Winkelmann, Controller Synthesis and Verification: A Case Study, in: C. Leverentz, T. Lindner, Formal Development of Reactive Systems, Lecture Notes in Computer Science (Nr. 891), Springer 1995, S. 55 - 74
[4] J. Burch et al, Symbolic Model Checking for Sequential Circuit Verification, IEEE Trans. on Computer-Aided Design of Integrated Circuits and Systems, Vol. 13, Nr. 4, S. 401 - 424, April 1994
[5] R. Bryant, Symbolic Boolean Manipulation with Ordered Binary-Decision Diagrams, ACM Computing Survey, Vol. 24, Nr. 3, S. 293 - 318, September 1992

## Patentansprüche

1. Verfahren zur rechnergestützten Fehleranalyse von Sensoren und/oder Aktoren in einem technischen System, welches in Form einer zustandsendlichen Beschreibung vorliegt, die Zustände des technischen Systems aufweist, durch einen Rechner, bei welchem Verfahren folgende Schritte durchgeführt werden:
a) bei dem für einen Fehler eines Sensors und/oder eines Aktors eine zustandsendliche Beschreibung des technischen Systems für den Fehlerfall ermittelt wird,
b) bei dem für das technische System im fehlerfreien Fall eine erste Menge erreichbarer Zustände ermittelt wird,
c) bei dem für das fehlerbehaftete technische System eine zweite Menge erreichbarer Zustände ermittelt wird,
d) bei dem eine Differenzmenge von Zuständen aus der ersten Menge und der zweiten Menge gebildet wird,
e) bei dem solche Ergebniszustände aus der Differenzmenge von Zuständen ermittelt werden, die vorgebbaren Bedingungen genügen.

2. Verfahren nach Anspruch 1,
bei dem die Verfahrensschritte a) bis f) für alle möglichen Fehler von Sensoren und/oder Aktoren, die das technische System aufweist, durchgeführt werden.

3. Verfahren nach Anspruch 1 oder 2,
- bei dem den Sensoren und/oder Aktoren Ausfallwahrscheinlichkeiten zugeordnet werden, und
- bei dem die Fehleranalyse unter Berücksichtigung der Ausfallwahrscheinlichkeiten erfolgt.

4. Verfahren nach einem der Ansprüche 1 bis 3,
bei dem die Verfahrensschritte b) und c) nach dem Verfahren des Model Checking erfolgt.

5. Verfahren nach einem der Ansprüche 1 bis 4,
bei dem in dem Verfahren eine zustandsendliche Beschreibung eines von dem technischen System durchgeführten Prozesses berücksichtigt wird.

6. Verfahren nach einem der Ansprüche 1 bis 5,
bei dem die zustandsendliche Beschreibung durch einen endlichen Automaten realisiert wird.

7. Verfahren nach Anspruch 6,
bei dem die zustandsendliche Beschreibung durch einen endlichen Automaten in Form eines Binary Decision Diagrams (BDD) realisiert wird.

8. Verwendung des Verfahrens nach einem der Ansprüche 1 bis 7 beim Rapid Prototyping des technischen Systems.

9. Verwendung des Verfahrens nach einem der Ansprüche 1 bis 7 im Rahmen der Fehlerdiagnose des technischen Systems.

10. Verwendung des Verfahrens nach einem der Ansprüche 1 bis 7 zur Generierung kritischer Prüffälle für eine Inbetriebsetzung und einen Systemtest des technischen Systems.

11. Verwendung des Verfahrens nach einem der Ansprüche 1 bis 7 zur präventiven Wartung des technischen Systems.

## Claims

1. Method for computer-aided fault analysis for sensors and/or actuators in a technical system which is in the form of a finite-state description comprising states of the technical system by a computer, which method involves performing the following steps:
a) in which, for a fault in a sensor and/or in an actuator, a finite-state description of the technical system is ascertained for the fault case,
b) in which a first set of attainable states is ascertained for the technical system in the fault-free case,
c) in which a second set of attainable states is ascertained for the faulty technical system,
d) in which a differential set of states is formed from the first set and from the second set,
e) in which such result states as satisfy prescribable conditions are ascertained from the differential set of states.

2. Method according to Claim 1,
in which method steps a) to e) are performed for all possible faults in sensors and/or actuators which the technical system comprises.

3. Method according to Claim 1 or 2,
- in which the sensors and/or actuators are assigned failure probabilities, and
- in which the fault analysis is effected taking into account the failure probabilities.

4. Method according to one of Claims 1 to 3,
in which method steps b) and c) are effected on the basis of the model checking method.

5. Method according to one of Claims 1 to 4,
in which the method involves taking into account a finite-state description of a process carried out by the technical system.

6. Method according to one of Claims 1 to 5,
in which the finite-state description is realized by a finite machine.

7. Method according to Claim 6,
in which the finite-state description is realized by a finite machine in the form of a binary decision diagram (BDD).

8. Use of the method according to one of Claims 1 to 7, in the rapid prototyping of the technical system.

9. Use of the method according to one of Claims 1 to 7 within the scope of fault diagnosis in the technical system.

10. Use of the method according to one of Claims 1 to 7 for generating critical test cases for start-up and a system test in the technical system.

11. Use of the method according to one of Claims 1 to 7 for preventive maintenance of the technical system.

## Revendications

1. Procédé d'analyse assistée par ordinateur de défaillances de capteurs et / ou d'actionneurs dans un système technique se présentant sous la forme d'une description d'état final, laquelle présente des états du système technique, les étapes suivantes dudit procédé étant exécutées par un ordinateur :
a) une description d'état final du système technique est établie pour une défaillance d'un capteur et/ou d'un actionneur du système en cas de défaillance ;
b) un premier ensemble d'états accessibles est déterminé pour le système technique exempt de défaillance ;
c) un deuxième ensemble d'états accessibles est déterminé pour le système technique défaillant ;
d) une différence d'états est établie entre le premier et le deuxième ensembles ;
e) des états résultant de la différence des deux ensembles d'états et satisfaisant à des conditions pouvant être prédéfinies peuvent être déterminés.

2. Procédé selon la revendication 1,
dans lequel les étapes a) à f) du procédé sont exécutées pour toutes les défaillances possibles de capteurs et / ou d'actionneurs contenus dans le système technique.

3. Procédé selon la revendication 1 ou 2,
- dans lequel des probabilités de défaillance sont attribuées aux capteurs et / ou aux actionneurs et
- dans lequel l'analyse des défaillances se fait compte tenu des probabilités de défaillance.

4. Procédé selon l'une des revendications 1 à 3,
dans lequel les étapes b) et c) du procédé se font selon le procédé du « model checking ».

5. Procédé selon l'une des revendications 1 à 4,
dans lequel une description d'état final d'un processus exécuté par le système technique est prise en compte dans le procédé.

6. Procédé selon l'une des revendications 1 à 5,
dans lequel la description d'état final est réalisée par un automate fini.

7. Procédé selon la revendication 6,
dans lequel la description d'état final est réalisée par un automate fini sous la forme d'un « Binary Decision Diagram » (BDD).

8. Utilisation du procédé selon l'une des revendications 1 à 7 dans le cadre du « Rapid Prototyping » du système technique.

9. Utilisation du procédé selon l'une des revendications 1 à 7 dans le cadre du diagnostic de défaillance du système technique.

10. Utilisation du procédé selon l'une des revendications 1 à 7 aux fins de générer des cas d'essai critiques pour une mise en service ou un test de système du système technique.

11. Utilisation du procédé selon l'une des revendications 1 à 7 aux fins de la maintenance préventive du système technique.
